# EUROPEAN PATENT APPLICATION

(11) **EP 4 624 931 A2**
(43) Date of publication of application: **01.10.2025**
(21) Application number: 25194622.4
(22) Date of filing: 19.07.2021
(51) Int. Cl.: G01N 35/00

(54) **MICROSCOPE**

(62) Divisional of application: 21186397.2
(71) Applicant: Leica Microsystems CMS GmbH, 35578 Wetzlar (DE)
(72) Inventor: Christ, Stefan, 35578 Wetzlar (DE)
(74) Representative: Schaumburg und Partner Patentanwälte mbB

(57) **Abstract**

A microscope (100, 500, 600, 700, 1000) for examining a sample received in a sample carrier (106) having a lid (400), comprising: A sample chamber (104) configured to receive the sample carrier (106); a microscope stage (108) arranged below the sample chamber (104), the microscope stage (108) being configured to have the sample carrier (106) arranged thereon; and a sample carrier handling device (116) that is at least partially arranged within the sample chamber (104) and that is configured to remove the lid (400) from the sample carrier (106) in order to provide access to the sample.

## Description

### Technical field

The invention relates to a microscope for examining a sample received in a sample carrier having a lid.

### Background

Sample carriers for use in microscopy may comprise a lid for sealing a sample received in the sample carrier from the environment. The lid prevents accidental contamination of the sample as well as spillage when the sample is handled by a user. In order to allow a microscopic examination of the sample, the lid is optically transparent. However, in order to manipulate the sample, e.g. by injecting a reagent into the sample, the lid must be removed which typically requires a manual action by the user. This need for human interaction decreases the walk-away time of an experiment, and thus, the efficiency of the experiment. Further, if contamination either of the sample or of the environment is a critical issue, the lid needs to be removed in a sterile or semi-sterile environment such as a sterile cabinet. This time consuming procedure further decreases the efficiency of the experiment.

### Summary

It is therefore an object to provide a microscope that allows for more efficient experiment designs and a higher throughput.

The aforementioned object is achieved by the subject-matter of the independent claim. Advantageous embodiments are defined in the dependent claims and the following description.

The proposed microscope for examining a sample received in a sample carrier having a lid comprises a sample chamber configured to receive the sample carrier; a microscope stage arranged below the sample chamber, the microscope stage being configured to have the sample carrier arranged thereon; and a sample carrier handling device. The sample carrier handling device is at least partially arranged within the sample chamber and is configured to remove the lid from the sample carrier in order to provide access to the sample.

The sample carrier may for example be a microscope slide, a petri dish or a multiwell plate configured to receive multiple samples. The sample carrier handling device automates removing the lid from the sample carrier in order to provide access to the sample for manipulation. Thereby, the need for human intervention is eliminated and the microscope can easily be integrated into a workflow design, in particular by means of software such as an experiment designer. Further, the sample carrier is received in the sample chamber and thereby shielded against the environment. This prevents contamination of the sample and/or the environment if the lid is removed. The possibility of automation combined with the reduced risk of contamination means the microscope can provide a long walk-away time resulting in more efficient experiment designs and a higher throughput.

In a preferred embodiment, the sample carrier handling device comprises an arm that is arranged inside the sample chamber and that is configured to engage with the lid of the sample carrier. The arm is a flexible mechanism for handling the lid. In particular, the arm can be designed such that a number of different lids of various sizes and shapes can be engaged with. Thereby a number of different formfactors of sample carrier can used with the proposed microscope.

In another preferred embodiment, the arm comprises a gripper, sliding mechanism, a key and lock feature or a suction cup that is configured to engage with the lid. In this embodiment, the lid can be securely attached to the arm. This prevents loss of the lid inside the sample chamber, which would require the user to retrieve the lid and thereby interrupt the experiment.

In another preferred embodiment, the arm is movable along a direction perpendicular to a top surface of the microscope stage on which the sample carrier is to be arranged. In other words, the arm can be moved vertically. Thereby, the lid can be lifted from the sample carrier without the risk of toppling the sample carrier which would disrupting the experiment.

In another preferred embodiment, the arm is rotatable around an axis perpendicular to the top surface of the microscope stage and/or rotatable around at least one axis parallel to the top surface of the microscope stage. This allows for a much finer articulation of the arm and thus a more precise handling of the lid.

In another preferred embodiment the microscope comprises a stage drive configured to laterally move the microscope stage in a plane which is parallel to the top surface of the microscope stage. Preferably, the microscope is an X-Y-table. This allows for example to select an individual cavity of a multiwell plate or selecting a specific region of interest of a single sample for observation.

In another preferred embodiment, the microscope stage is configured to move the sample carrier between at least two of the following positions: an initial position in which the sample carrier is first received in the sample chamber, a lid-removal position in which the lid of the sample carrier can be removed by the sample carrier handling device, an examination position in which the sample can be microscopically examined, and a manipulation position in which the sample can be manipulated. The sample carrier is loaded into the microscope in the initial position, either manually or automatically. The sample carrier is then moved to either to the examination position for examination or the lid-removal position. If the sample carrier is moved to the lid-removal position, the lid is removed and the sample carrier is further moved to the manipulation position, where the sample or the samples received in the sample carrier are manipulated. Following the manipulation, the sample carrier can be moved to the examination position for examination of the manipulated sample or samples. In this embodiment, a number of different experiments can be automated very easily and thus making the microscope more versatile.

In another preferred embodiment the microscope comprises a pipetting device for pipetting the sample, in particular an injector device configured to inject a liquid into the sample, and/or a micromanipulator device configured to manipulate the sample. In this embodiment, the sample or the samples can be pipetted and/or manipulated within the shielded environment of the sample chamber, after the lid has been removed. In particular, the sample or the samples can be pipetted and/or manipulated while they are being microscopically examined. This allows a number of experiments to be performed that would otherwise not be possible, for example tracking the neuronal activities of neurons that have been activated by an injected reagent.

In another preferred embodiment, the sample chamber is an incubated sample chamber containing an incubation atmosphere and/or a sterile sample chamber containing a sterile atmosphere. The shielded environment of the sample chamber can be used to provide an incubation atmosphere for incubating the sample. This allows for example for the long time observation of cell cultures without the need of an external incubator. When an external incubator is used, the sample has to be moved through a potentially non-favorable environment such as a laboratory environment. This not only stresses the sample but takes additional time as well.

Further, the shielded environment of the sample chamber can be used to provide a sterile or at least semi-sterile atmosphere. In this embodiment, even samples that are extremely sensitive to contamination can be manipulated with the microscope.

In another preferred embodiment the microscope comprises a first fan assembly configured to blow atmosphere into the sample chamber through at least one first opening of the sample chamber, and a second fan assembly configured to drain atmosphere from the sample chamber through at least one second opening of the sample chamber. This provides a directed flow of atmosphere in the sample chamber. This flow can entrain any particles, like dust, dirt, and germs, entering the sample chamber and transport them to an exit opening. This allows for a sterile or semi-sterile work environment inside the sample chamber. Further, in case of an incubated sample chamber, it is possible to recycle incubation atmosphere. Incubation atmosphere drained out of the sample chamber may be recycled and blown back into the sample chamber. A part of the incubation atmosphere may be refreshed or replenished. This saves incubation atmosphere volume and energy after opening and closing of the door of the sample chamber.

In another preferred embodiment, the at least one first opening and the at least one second opening are arranged on opposite sides of the sample chamber, in particular a top side and a bottom side of the sample chamber. In this embodiment, a laminar flow of the atmosphere inside the sample chamber may be created.

In another preferred embodiment, the first fan assembly, the at least one first opening and the at least one second opening are configured to generate a laminar flow inside the sample chamber. The laminar flow acts like a shield or curtain preventing atmosphere from escaping the sample chamber and preventing external atmosphere from entering the sample chamber.

In another preferred embodiment the microscope comprises a sample carrier identification unit configured to identify the sample carrier. The sample carrier identification unit can be used to uniquely identify the sample carrier, and thus the sample or sample contained therein. Thereby, multiple sample carrier can be automatically examined and/or manipulated one after the other. This further enhances the walk-away time of the microscope.

In another preferred embodiment, the sample carrier identification unit comprises a camera, barcode reader and/or RFID-reader. The camera can be used to uniquely identify the sample carrier based on a tag such as a barcode or a QR code, or based on a handwritten label. The barcode reader can be used to uniquely identify the sample carrier based on a barcode. The RFID-reader can be used to uniquely identify the sample carrier based on an RFID-tag.

In another preferred embodiment the microscope comprises a box-type microscope housing defining the sample chamber, the housing having a door for providing access to the sample chamber. Box-type microscopes comprise a housing in which all the microscopes components are arranged. The housing typically comprises one or more openings for accessing the inside of the microscope. Due to the enclosed or even sealed nature of the housing, box-type microscopes are especially suited for precisely controlling the environment of the samples, for example by a climate control unit. In this embodiment, the sample chamber is located inside the box-type microscope housing. This means, that the environment of the sample chamber can be precisely controlled.

In another preferred embodiment, the box-type microscope housing defines a component space below the microscope stage, the component space including a plurality of microscope components. The component space may include a power source of the microscope, an optical imaging system, an illumination system, filters, an environmental control unit, or an incubation control unit.

### Short Description of the Figures

Hereinafter, specific embodiments are described referring to the drawings, wherein:
- Figure 1: is a schematic view of a microscope having a sample carrier handling device;
- Figure 2: is a top view of the sample chamber of the microscope according to Figure 1 wherein an arm of sample carrier handling device is in a resting position;
- Figure 3: is a top view of the sample chamber of the microscope according to Figure 1 wherein the arm of sample carrier handling device is in a lid-gripping position;
- Figure 4: is a top view of the sample chamber of the microscope according to Figure 1 wherein the arm of sample carrier handling device is in a lid-holding position;
- Figure 5: is a top view of the sample chamber of the microscope according to an embodiment having a pipetting device;
- Figure 6: is a top view of the sample chamber of the microscope according to an embodiment having a sample carrier identification unit;
- Figure 7: is a side view of the sample chamber of the microscope according to an embodiment;
- Figure 8: is a side view of the sample carrier handling device according to an embodiment having a lock and key mechanism;
- Figure 9: is a side view of the sample carrier handling device according to an embodiment having a suction cup;
- Figure 10: is a schematic side view of the microscope according to an embodiment;
- Figure 11: is a schematic perspective view of the microscope according to Figure 10; and
- Figure 12: is a flowchart of a method for examining a sample with the microscope.

### Detailed Description

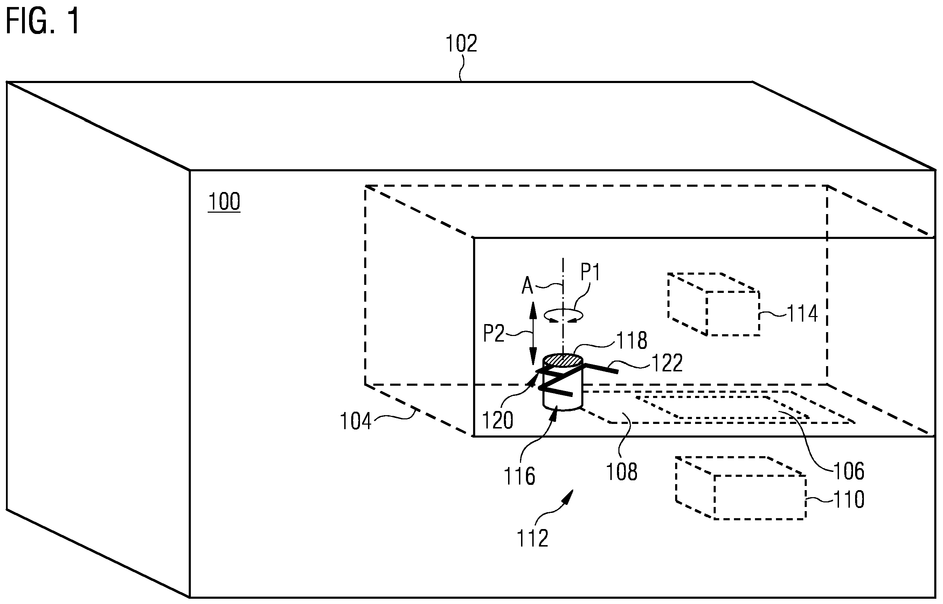

Figure 1 is a schematic view of a microscope 100. The microscope 100 is exemplary formed as a box-type microscope.

Conventional microscopes comprise a microscope stand which holds all microscope components. The open nature of the conventional microscope allows easy access to all its components. However, due to the open nature samples arranged on a conventional microscope are exposed to the environment. Further, the microscope stand typically blocks access to the sample from one side.

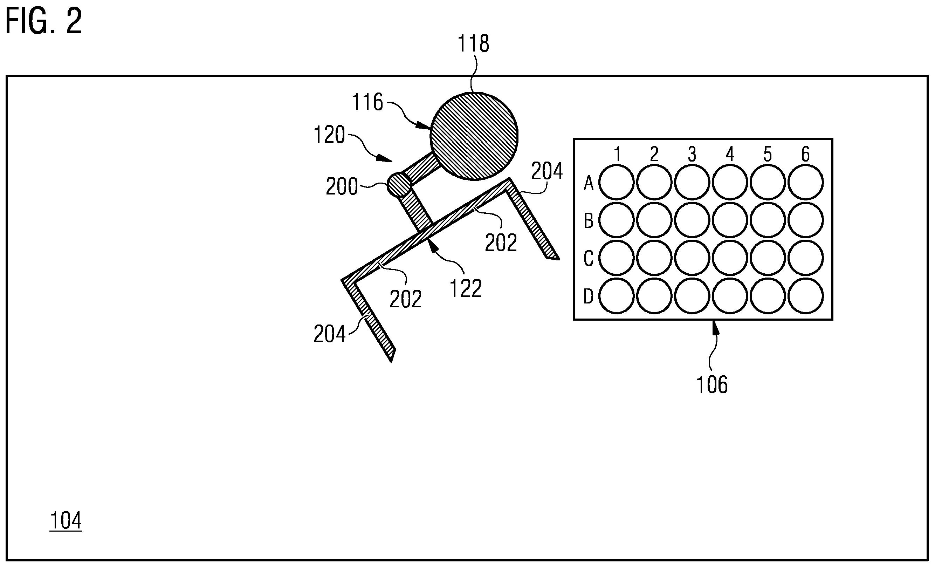

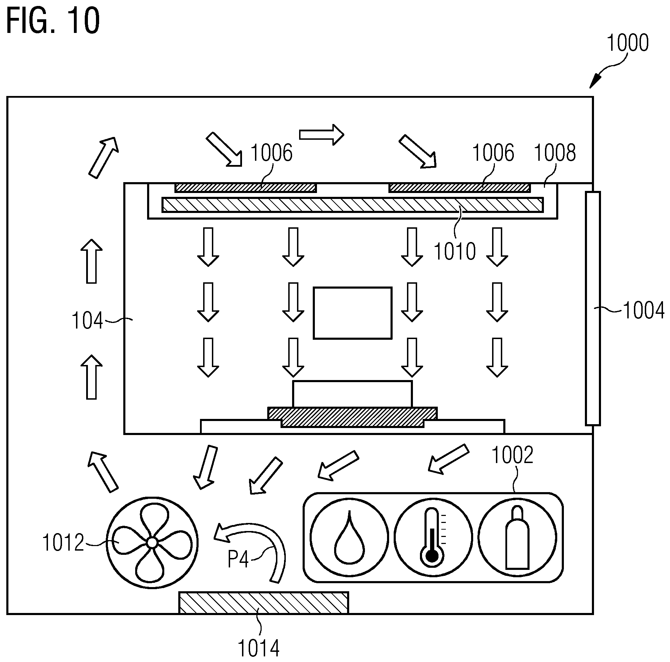

In contrast thereto, the box-type microscope 100 shown in Figure 1 is completely enclosed inside a microscope housing 102. In particular, the microscope housing 102 forms a sample chamber 104 configured to receive a sample carrier 106 having an optically transparent lid 400 (c.f. Figure 2) in which one or more sample are arranged. The lid 400 shields a sample or samples received in the sample carrier 106 from the environment and thus prevents contamination and prevents the sample from drying out. The lid 400 also prevents spillage when the sample carrier 106 is handled by a user. By enclosing the sample carrier 106 inside the microscope housing 102, a precise control over the sample's environment is possible, for example via a incubation control unit 1002 (c.f. figure 10) for controlling temperature, humidity and gas composition of the sample chamber 104. The enclosed samples are also shielded against the environment even if the lid 400 is removed, and thus both the sample and the environment are protected against accidental contamination. Further, the sample chamber 104 can easily be made into an incubation chamber and/or a sterile environment, if an experiments demands it.

The sample carrier 106 is positioned atop a microscope stage 108 that is arranged below the sample chamber 104. The microscope stage 108 is movable along two orthogonal directions, i.e. the microscope stage 108 is a so called X-Y-table. Thus, moving the microscope stage 108 allows for example for selecting an individual cavity or well of the sample carrier 106 or selecting a specific region of interest of a single sample for observation.

The microscope 100 according to Figure 1 is exemplary formed as a transmitted light microscope 100. Imaging optics 110 for imaging the samples are exemplary arranged below the microscope stage 108 in a component space 112 and an illumination system 114 for illuminating the samples is arranged above the microscope stage 108 inside the sample chamber 104. The optical axis of the imaging optics 110 and the optical axis of the illumination system 114 are aligned. Thereby, illumination light emitted by the illumination system 114 passes through the samples before entering the imaging optics 110. In an alternative embodiment, the positions of the imaging optics 110 and the illumination system 114 may be reversed. In another alternative embodiment, both the imaging system and the illumination system 114 are arranged on the same side of the microscope stage 108. Additional components such as a power source or various filters may be arranged in the component space 112.

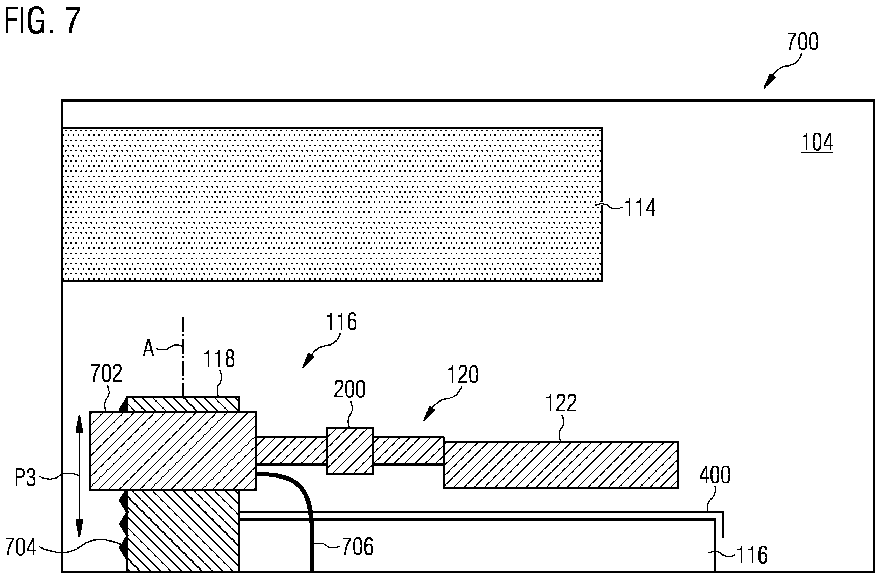

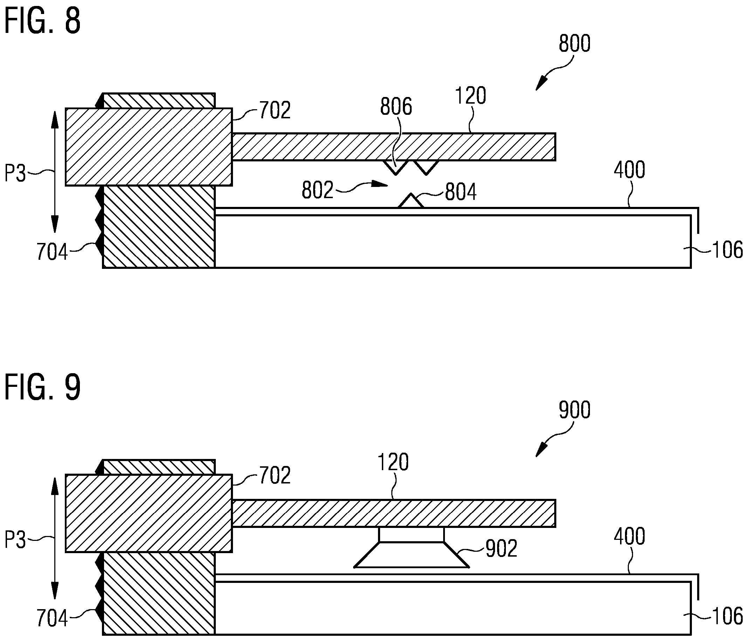

In order to remove the lid 400 from the sample carrier 106 and to allow access to the samples from the top for manipulation, the microscope 100 comprises a sample carrier handling device 116. The sample carrier handling device 116 exemplary comprises a base 118 that is arranged next to the microscope stage 108 inside the sample chamber 104, and an arm 120 that is connected to the base 118. In the embodiment according to Figure 1, the arm 120 comprises a gripper 122 for engaging with the lid 400 of the sample carrier 106. However, other elements for engaging with the lid 400, such as a key and lock feature or a suction cup 902 (c.f. Figures 8 and 9), are also possible. The arm 120 can be rotated around the base 118 and moved along a vertical axis A. This is indicated in Figure 1by two double-headed arrows P1, P2 and described in more detail below with reference to Figures 7 to 9. Additional components of the sample carrier handling device 116 such as one or more motors for moving the arm 120 and the gripper 122, and a control unit for controlling the arm 120 may be arranged in the component space 112 below the sample chamber 104. The sample carrier handling device 116 will be described in more detail in the following with reference to Figures 2 to 9.

Figure 2 is a top view of the sample chamber 104 of the microscope 100 according to Figure 1. In Figure 2, the arm 120 of the sample carrier handling device 116 is rotated away from the sample carrier 106 in a resting position.

The sample carrier 106 is exemplary formed as a multi well plate having 24 wells arranged in 4 rows and 6 columns. The rows are labelled A to D and the columns are labelled 1 to 6 in order to uniquely identify each well. In Figure 2 the lid 400 is arranged atop the sample carrier 106.

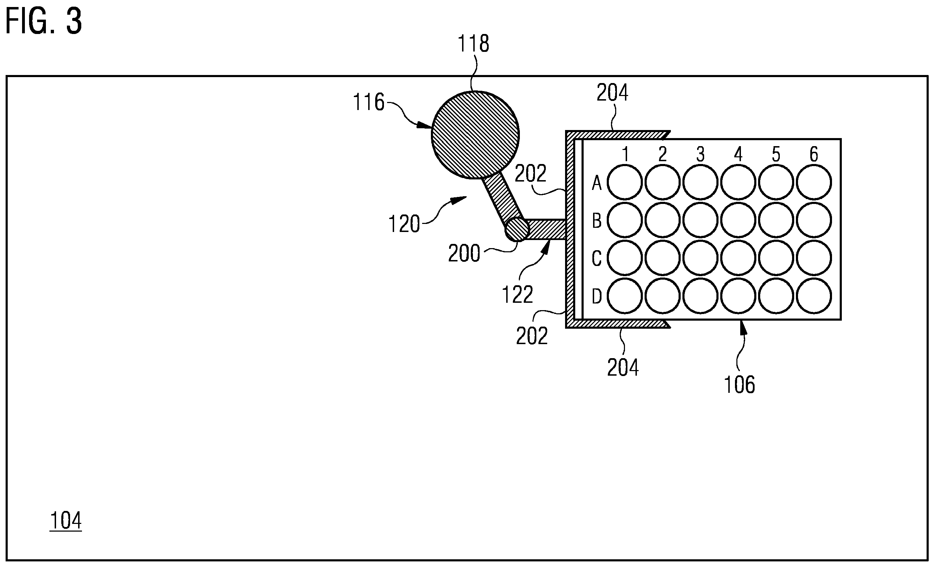

As can be seen Figure 2, the arm 120 comprises an arm joint 200 around which the gripper 122 can be rotated. This provides the arm 120 with articulation for a finer control. The gripper 122 comprises two L-shaped gripper arms 202 each having a gripping portion 204 that can engage the lid 400 of the sample carrier 106 from opposite sides and thereby grab the lid 400. The process of grabbing the lid 400 is described in more detail below with reference to Figure 3.

Figure 3 is another top view of the sample chamber 104 of the microscope 100 according to Figure 1. In Figure 3, the arm 120 of the sample carrier handling device 116 is rotated such that the gripper arms 202 can engage with the lid 400 of the sample carrier 106 in a lid-gripping position. The gripping portions 204 of the gripper arms 202 are moved towards each other in order to grab the lid 400 of the sample carrier 106. In a next step, the arm 120 is lifted upwards in order to lift the lid 400 off the sample carrier 106.

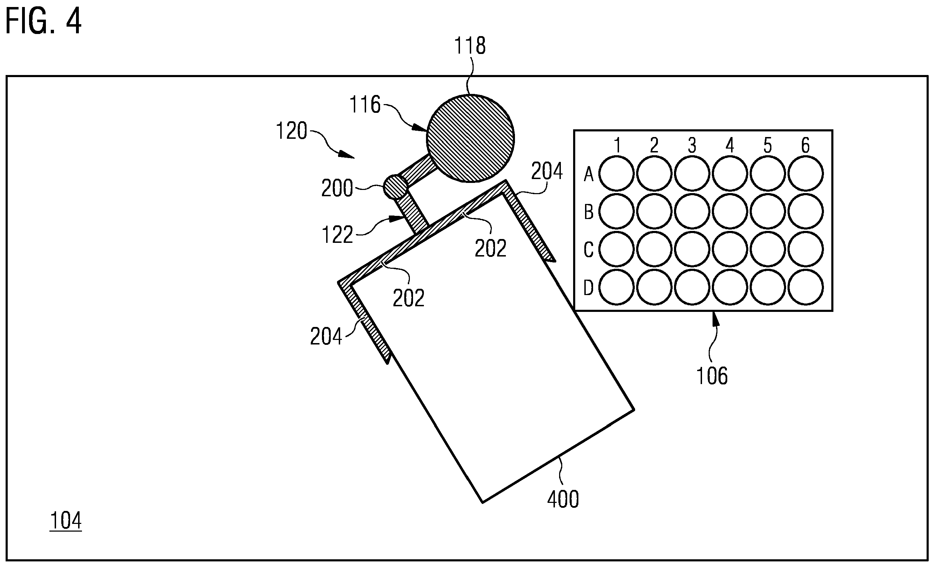

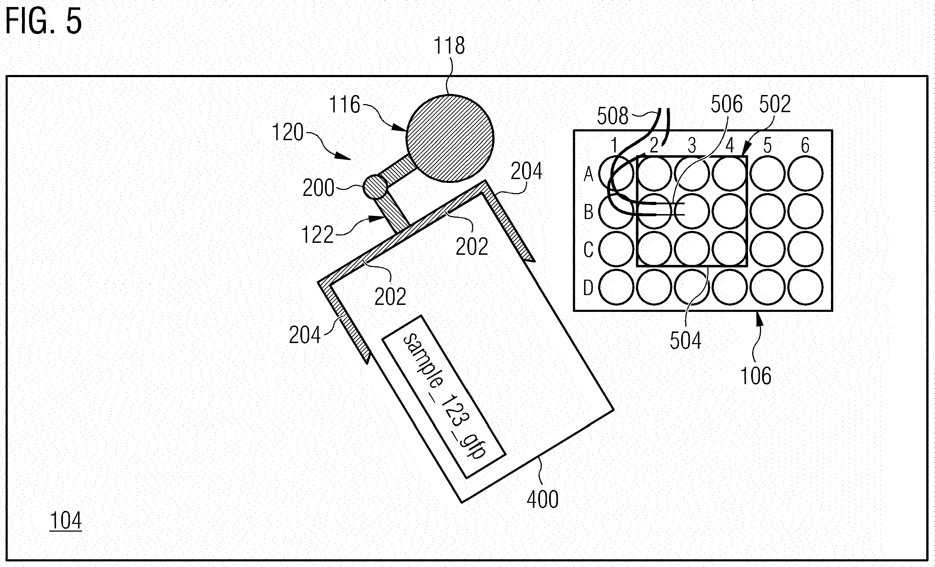

Figure 4 is another top view of the sample chamber 104 of the microscope 100 according to Figure 1. In Figure 4, the arm 120 of the sample carrier handling device 116 is holding the lid 400 of the sample carrier 106 and is rotated away from the sample carrier 106 in a lid-holding position. In the lid-holding position the lid 400 is not located above the sample carrier 106. Thus, the samples arranged in the sample carrier 106 are accessible from the top for manipulation. Manipulation of the sample will be described in the following with Reference to Figure 5.

Figure 5 is a top view of the sample chamber 104 of a microscope 500 according to an embodiment. The microscope 500 according to Figure 5 is distinguished from the microscope 100 according to Figure 1 in having a pipetting device 502 for pipetting the samples. Pipetting the samples may for example comprise introducing various liquid reagents into the samples.

The pipetting device 502 comprises a rectangular frame 504 that is arranged parallel to the top surface of the microscope stage 108. The frame 504 holds one or more injection nozzles 506, of which only two injection nozzles 506 are shown in Figure 5. Each injection nozzle 506 is connected via a fluid line 508 to a liquid reservoir outside the sample chamber 104. The frame 504 is moveable inside the sample chamber 104 by means of an injector drive. Thus, the injection nozzles 506 can target individual wells of the sample carrier 106 for pipetting.

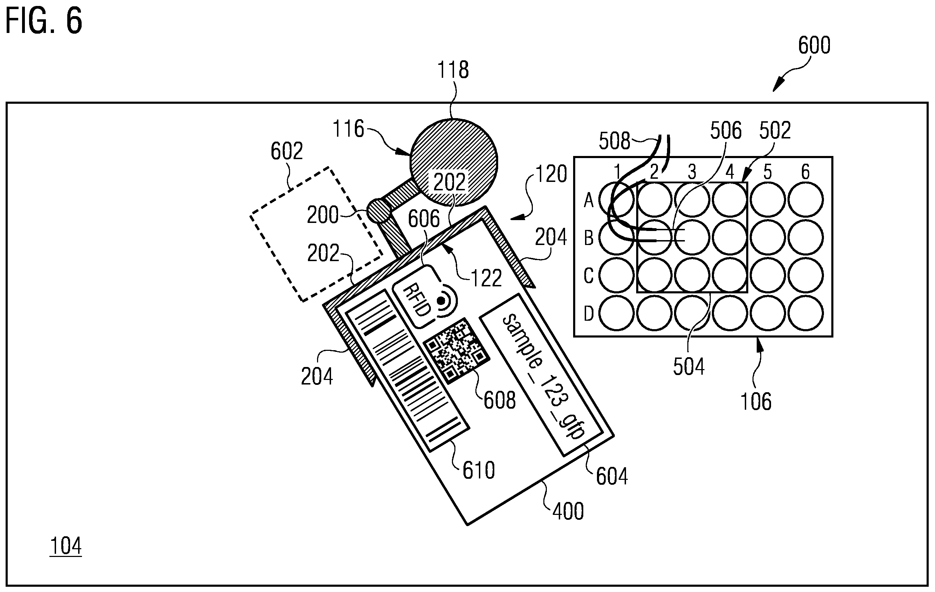

Figure 6 is a top view of the sample chamber 104 of the microscope 600 according to another embodiment. The microscope 600 according to Figure 6 is distinguished from the microscope 500 according to Figure 5 in having a sample carrier identification unit 600.

In Figure 6, the lid 400 is pictured having a handwritten label 604, an RFID-tag 606, a QR-code 608, and a barcode 610 each forming a unique identifier that uniquely identifies the sample carrier 106. The sample carrier identification unit 600 is configured to read at least of these unique identifiers. The sample carrier identification unit 600 may for example comprise a camera and a control unit. The camera is configured to capture an image of the lid 400, if the arm 120 is in the lid-holding position, and to transmit said image to the control unit. The control unit is exemplary configured for handwritten text recognition. Thus, control unit is able to translate the handwritten label 604 into machine readable text and thereby identify the sample carrier 106. Alternatively, or additionally, the control unit is configured to translate the QR-code 608 and/or the barcode 610 into machine readable text in order to identify the sample carrier 106. The sample carrier identification unit 600 may also comprise a dedicated barcode reader or an RFID-reader configured to identify the sample carrier 106 base 118d on the RFID-tag 606.

Figure 7 is a side view of the sample chamber 104 of the microscope 700 according to an embodiment.

The arm 120 of the sample carrier handling device 116 comprises an arm driver 702 that wraps around the base 118. The arm driver 702 comprises a first motor that engages with a rail 704 of the base 118 in order to move the arm 120 along the vertical axis A. The arm driver 702 further comprises a second motor configure to rotate the arm driver 702, and thereby the whole arm 120, around the base 118. A cable 706 connects the arm driver 702 to the component space 112 below the sample chamber 104. The cable 706 comprises electric and control lines in order to provide the two motors of arm driver 702 as well as actuators of the arm joint 200 and the gripper 122 with electric power and control signals.

Figure 8 is a side view of the sample carrier handling device 800 according to an embodiment. The sample carrier handling device 800 according to Figure 8 is distinguished from the sample carrier handling device 800 according to the Figures 1 to 7 by having a lock and key mechanism 802 for engaging with the lid 400 of the sample carrier 106.

The lock and key mechanism 802 comprises a first holding feature 804 that is arranged on the lid 400 of the sample carrier 106 and a second holding feature 806 that is arranged on a downside of the arm 120 of the sample carrier handling device 800. The second holding feature 806 is configured to attach to and detach from the first holding feature 804. When the second holding feature 806 is attached to the first holding feature 804, the arm 120 can be moved upwards in order to lift the lid 400 from the sample carrier 106.

Figure 9 is a side view of the sample carrier handling device 900 according to another embodiment. The sample carrier handling device 900 according to Figure 9 is distinguished from the sample carrier handling device 900 according to the Figures 1 to 8 by having a suction cup for engaging with the lid 400 of the sample carrier 106.

The suction cup is arranged on a downside of the arm 120 of the sample carrier handling device 116. When the suction cup touches a top surface of the lid 400, air can be removed from the center of the suction cup in order to attach the lid 400 to the suction cup and thereby to the arm 120. The air can be removed by moving the arm 120 downwards, thereby pressing the suction cup against the top surface of the lid 400 and forcing the air out of the center of the suction cup. Alternatively, the air can be removed by a small pump from the center of the suction cup. When air is let into the center of the suction cup again, for example by means of a controllable valve, the lid 400 is detached from the arm 120 again.

Figure 10 is a schematic side view of the microscope 1000 according to an embodiment having means for controlling the atmosphere inside the sample chamber 104.

A front door 1004 for accessing the sample chamber 104 is arranged on the right side of the sample chamber 104 in Figure 10. Other or additional doors may be provided as desired.

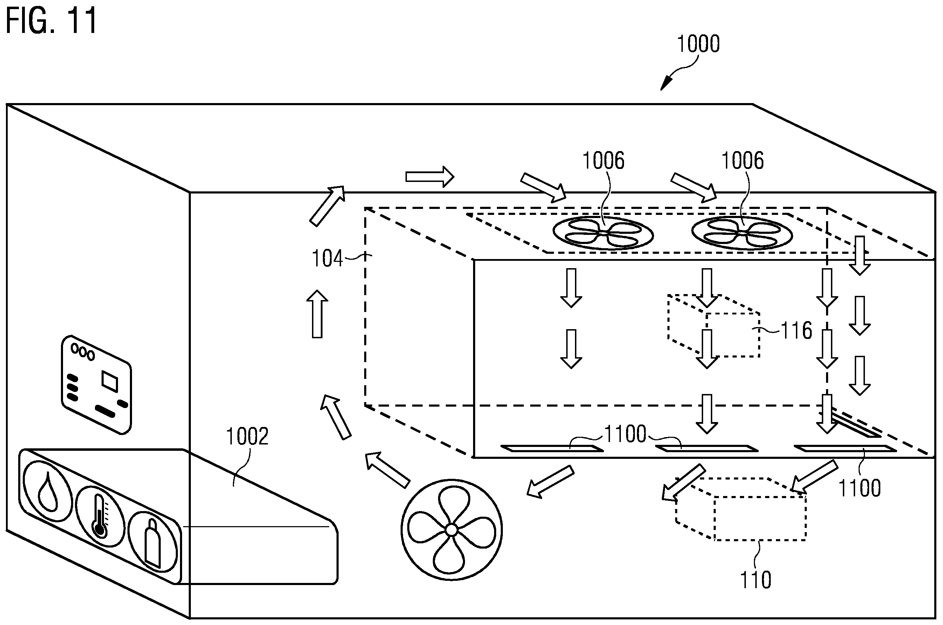

A first fan assembly 1006 comprising two fans is arranged on an upper side of the sample chamber 104 for blowing atmosphere into the sample chamber 104 through a first opening 1008 of the sample chamber 104. The opening is formed to receive a filter system which may be a filter 1010 extending through the entire opening. It is, however, also possible to provide single openings for each of the fans of the first fan assembly 1006, and to optionally arrange filters in each of these openings. A plurality of second openings 1100 (c.f. Figure 11) are arranged on lower side of the sample chamber 104 for allowing atmosphere from inside the sample chamber 104 to exit the sample chamber 104 (also called "exit openings").

When the first fan assembly 1006 is activated, a directed flow of atmosphere from the upper side of the sample chamber 104 down to the exit openings in the lower side wall is generated. Atmosphere escaping from the interior of the sample chamber 104 on its lower side passes through the interior of the microscope housing 102 and is sucked in by the first fan assembly 1006 and again blown into the sample chamber 104. Thus, a steady flow of atmosphere is created that is indicated in Figure 10 by a set of black arrows. Preferably, the directed flow of atmosphere is a laminar flow.

The microscope 1000 further comprises an optional second fan assembly 1012 arranged on the lower side of the sample chamber 104. The second fan assembly 1012 includes one single fan for sucking in atmosphere flowing through at least one second opening 2000. Thus, the second fan assembly 1012 supports circulation of atmosphere through the inside of the microscope housing 102 and through the inside of the sample chamber 104.

A second filter system 1014 is arranged at an opening or leak of the microscope housing 102. Such an opening/leak may allow fresh air from outside the microscope 1000 to be conducted into the inside of the microscope housing 102. Such air is filtered by the second filter system and sucked into the second fan assembly 1012 as shown by a single dotted arrow P4.

The microscope 1000 according to Figure 10 further comprises an incubation control unit 1002 for controlling and adjusting parameters of the incubation atmosphere circulating between the interior of the sample chamber 104 and the outside of the sample chamber 104 within the microscope housing 102 as indicated by the set of black arrows.

Suitable incubation atmospheres comprise air with a predefined content of H₂O (relative humidity) and a predefined content of CO₂ (carbon dioxide). It is also desirable to conduct hypoxia experiments with a deficiency of oxygen in the atmosphere. Typically, the temperature of the incubation atmosphere can be set in a range between the ambient temperature and up to 50° C, the CO₂-range is typically set between 0.5 to 20%, and the O₂-range is between 1 to 18%. The humidity must be balanced to ensure that potential condensation is avoided or at least does not harm 120 neither the microscope 1000 components nor the sample itself. It is preferred to control at least the temperature, the humidity and the CO₂-content on its own. In hypoxia experiments, the O₂-content is controlled by introduction of N₂ (nitrogen). These parameters of the incubation atmosphere can be controlled and adjusted by the incubation control unit 1002. In order to control the above parameters, it is preferred to arrange corresponding sensors in the sample chamber 104 and/or inside the microscope housing 102 and/or at the microscope stage 108, preferably close to the sample.

A control unit may be used to regulate the power of the second fan assembly 1012 in order to control its suction pressure. The control unit may be connected to the incubation control unit 1002 for best results in this regard.

Figure 11 is a schematic perspective view of the microscope 1000 according to Figure 10.

Figure 11 shows the distribution of the second (exit) openings 1100 along two edges of the lower side of the sample chamber 104. The laminar flow acts as a shield or curtain around one side of the microscope stage 108. This shield/curtain of atmosphere prevents intrusion of particles including germs into the sample chamber 104, particularly onto the sample itself, and simultaneously prevents atmosphere from inside the sample chamber 104 to escape from the same and atmosphere from outside the sample chamber 104 to invade the sample chamber 104.

When a user moves their arm 120 into the sample chamber 104 via the door 1004 the laminar flow is only interrupted in a small region around the user's arm 120 such that the remaining flow of atmosphere still acts as a protective shield. Further, any contamination brought in by the user's arm 120 can be entrained by the flow of atmosphere and transported to the exit openings in the lower side wall of the sample chamber 104.

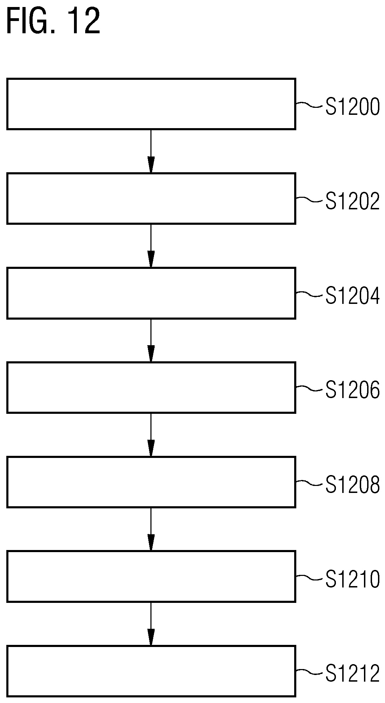

Figure 12 is a flowchart of a method for examining a sample with the microscope 100 detailed above.

In step S1200 the process is started. In step S1202 the sample chamber 104 is opened and the sample container with the lid 400 is placed in the microscope stage 108. The sample chamber 104 is then closed. In step S1204 the incubation for the sample chamber 104 is started or reinitiated. When the sample chamber 104 has acquired sterile or semi sterile conditions according to user preference, step S1206 is performed. In step S1206 a de lid-removal command is given to the microscope 100 either by user input or a control unit, for example a computer, that performs an automated workflow. The microscope stage 108 then moves the sample carrier 106 to a predefined lid-removal position. The arm 120 of the sample carrier handling device 116 is then moved into the lid-gripping position, engages the lid 400 and lifts the lid 400 off the sample carrier 106. The arm 120 is then moved to the lid-holding position.

In step S1208 the sample carrier 106 is moved to an examination position in which the sample can be microscopically examined, or to a manipulation position in which the sample can be manipulated. The examination position and the manipulation position may also be identical. Following the manipulation and/or examination of the sample, step S1210 is performed. In step S1210 a lid-attachment command is given to the microscope 100 either by user input or by the control unit. The microscope stage 108 then moves the sample carrier 106 to the lid-removal position. The arm 120 of the sample carrier handling device 116 is then moved into the lid-gripping position, lowers the lid 400 the lid 400 onto the sample carrier 106 and then disengages from the lid 400. The arm 120 is then moved to the resting position. The process is then ended in step S1212 or the steps S1202 to S1210 are repeated for additional sample carrier 106s.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of Reference Signs

- 100: Microscope
- 102: Microscope housing
- 104: Sample chamber
- 106: Sample carrier
- 108: Microscope stage
- 110: Imaging optics
- 112: Component space
- 114: Illumination system
- 116: Sample carrier handling device
- 118: Base
- 120: Arm
- 122: Gripper
- 200: Arm joint
- 202: Gripper arms
- 204: Gripping portion
- 400: Lid
- 500: Microscope
- 502: Pipetting device
- 504: Frame
- 506: Injection nozzle
- 508: Fluid line
- 600: Microscope
- 602: Sample carrier identification unit
- 604: Label
- 606: RFID-tag
- 608: QR-code
- 610: Barcode
- 700: Microscope
- 702: Arm driver
- 704: Rail
- 706: Cable
- 800: Sample carrier handling device
- 802: Lock and key mechanism
- 804, 806: Holding feature
- 900: Sample carrier handling device
- 902: Suction cup
- 1000: Microscope
- 1002: Incubation control unit
- 1004: Door
- 1006: Fan assembly
- 1008: Opening
- 1010: Filter
- 1012: Fan assembly
- 1014: Filter system
- A: Axis
- P1, P2, P3, P4: Arrow

## Claims

1. A microscope (100, 500, 600, 700, 1000) for examining a sample received in a sample carrier (106) having a lid (400), comprising:
a sample chamber (104) configured to receive the sample carrier (106);
a microscope stage (108) arranged below the sample chamber (104), the microscope stage (108) being configured to have the sample carrier (106) arranged thereon; and
a sample carrier handling device (116) that is at least partially arranged within the sample chamber (104) and that is configured to remove the lid (400) from the sample carrier (106) in order to provide access to the sample,
wherein the sample carrier handling device (116) comprises an arm (120) that is arranged inside the sample chamber (104) and that is configured to engage with the lid (400) of the sample carrier (106), and
wherein the arm (120) comprises a gripper (122), sliding mechanism, a lock and key mechanism (802) or a suction cup (902) that is configured to engage with the lid (400).

2. The microscope (100, 500, 600, 700, 1000) according to claim 1, wherein the arm (120) is movable along a direction perpendicular to a top surface of the microscope stage (108) on which the sample carrier (106) is to be arranged.

3. The microscope (100, 500, 600, 700, 1000) according to claim 1 or 2, wherein the arm (120) is rotatable around an axis perpendicular to the top surface of the microscope stage (108) and/or rotatable around at least one axis parallel to the top surface of the microscope stage (108).

4. The microscope (100, 500, 600, 700, 1000) according to any one of the preceding claims comprising a stage drive configured to laterally move the microscope stage (108) in a plane which is parallel to the top surface of the microscope stage (108).

5. The microscope (100, 500, 600, 700, 1000) according to any one of the preceding claims, wherein the microscope stage (108) is configured to move the sample carrier (106) between at least two of the following positions:
an initial position in which the sample carrier (106) is first received in the sample chamber (104),
a lid-removal position in which the lid (400) of the sample carrier (106) can be removed by the sample carrier handling device (116),
an examination position in which the sample can be microscopically examined, and
a manipulation position in which the sample can be manipulated.

6. The microscope (500, 600) according to any one of the preceding claims, comprising a pipetting device (502) for pipetting the sample, in particular an injector device configured to inject a liquid into the sample, and/or a micromanipulator device configured to manipulate the sample.

7. The microscope (1000) according to any one of the preceding claim, wherein the sample chamber (104) is an incubated sample chamber (104) containing an incubation atmosphere and/or a sterile sample chamber (104) containing a sterile atmosphere.

8. The microscope (1000) according to any one of the preceding claims, comprising a first fan assembly (1006) configured to blow atmosphere into the sample chamber (104) through at least one first opening (1008) of the sample chamber (104), and a second fan assembly (1012) configured to drain atmosphere from the sample chamber (104) through at least one second opening of the sample chamber (104).

9. The microscope (1000) according to claim 8, wherein the at least one first opening (1008) and the at least one second opening are arranged on opposite sides of the sample chamber (104), in particular a top side and a bottom side of the sample chamber (104).

10. The microscope (1000) according to claim 8 or 9, wherein the first fan assembly (1006), the at least one first opening (1008) and the at least one second opening (1100) are configured to generate a laminar flow inside the sample chamber (104).

11. The microscope (600) according to any one of the preceding claims, comprising a sample carrier identification unit (600) configured to identify the sample carrier (106).

12. The microscope (600) according to claim 11, wherein the sample carrier identification unit (600) comprises a camera, barcode reader and/or RFID-reader.

13. The microscope (100, 500, 600, 700, 1000) according to any one of the preceding claims comprising a box-type microscope housing (102) defining the sample chamber (104), the housing having a door (1004) for providing access to the sample chamber (104).
